# EUROPEAN PATENT APPLICATION

(11) **EP 2 679 958 A1**
(43) Date of publication of application: **01.01.2014**
(21) Application number: 12305757.2
(22) Date of filing: 27.06.2012
(51) Int. Cl.: G01C 21/36

(54) **A mobile device comprising a thermoelectric element**

(71) Applicant: Orange, 75015 Paris (FR)
(72) Inventor: Tucker, Richard, BILLERICAY, Essex CM11 2HT (GB); Williams, Jason, TWICKENHAM, GREater London TW2 7NW (GB); Collignon, Vivien, 35132 VEZIN LE COQUET (FR); Lam, Long, MIDDLESEX, Middlesex TW3 2LL (GB)
(74) Representative: Brunelli, Gérald

(57) **Abstract**

The invention has for object a mobile device comprising at least a thermoelectric element (100), control means (101) and a sensor (102) providing input data (103) representative of the position and/or orientation of the mobile device. The control means (101) being arranged to determine a target destination (105); collect input data from the sensor (102); compare the input data with the target destination; control (104) the temperature of the thermoelectric element (100) based on this comparison.

## Description

This invention relates to a mobile device comprising a thermoelectric element and is particularly, but not exclusively, applicable to navigation systems.

Mobile devices such as smartphones or tablet computers are widely used for navigation purpose. For example, a traveller arriving in an unknown city can go to a chosen location without being prepared to it before his arriving. For that purpose, he may use an application such as Google Map™ to enter the address of his final destination. This final destination and his current location will be displayed on a map allowing him to find his way. If the mobile device comprises a gyroscope, an arrow can be displayed on the map or next to it. This improves the spatial orientation of the user, that is to say his ability to maintain his body orientation in relation to the surrounding environment.

A particular problem with the existing mobile devices providing navigation solutions is that the user must keep an eye on the screen while walking towards his destination. This has the effect of slowing down his progression and even to make it hazardous if there are obstacles on the way.

Additionally, people having a poor sense of direction may have difficulties using their mobile device to navigate. Most of them will need a period of adaptation to understand the navigational information displayed on the screen. This will slow down their progression as well.

The invention concerns a mobile device comprising at least a thermoelectric element, control means and at least a sensor providing input data representative of the position and/or orientation of the mobile device, the control means being arranged to:
- determine a target destination;
- collect input data from the sensor;
- compare the input data with the target destination;
- control the temperature of the at least one thermoelectric element based on this comparison.

Advantageously, the user of such a device will get additional information presented in the form of a temperature variation. This information may confirm that he is the correct way towards his target destination or that he has to change his path.

The input data can be generated by at least one of these sensors: a gyroscope, a GNSS receiver, such as a Global Positioning System (GPS) device, and/or a barometer that measures the atmospheric pressure, the said pressure being then converted into an estimation of the mobile device's altitude.

Incorporating a barometer in the mobile device has the advantage of taking into account changes in altitude. Additionally, using several sensors together has the advantage of increasing the accuracy of the temperature control.

According to one aspect of the invention, the temperature of the thermoelectric element is increased when it comes closer to the target destination and decreased when it moves away from it. This makes the use of this mobile device intuitive, as it is commonly accepted that a temperature increase is a sign of getting closer to the destination.

Alternatively, the temperature of thermoelectric element is decreased when it comes closer to the target destination and increased when it moves away from it.

The control means may determine a path toward the target destination, determines the optimal orientation to follow this path, the temperature of the thermoelectric element being increased when the mobile device orientation comes closer to the said best orientation and decreases when it moves away from it.

According to a complementary aspect of the invention, a MEMS (Micro-Mechanical-Electronics System) or a NEMS (Nano-Mechanical-Electronic System) barometric sensor can be used to provide data representative to the device's position.

Advantageously, MEMS barometers usually include temperature sensors to compensate for errors introduced by the variation of pressure due to the weather.

The control means may be adapted to construct a navigation path toward a final destination by determining at least an intermediate point. This can help the user to find his way when he is approaching intersections or crossroads for example.

Preferably the thermoelectric element is located inside the device's chassis and against its back side in order to maximize the heat or cold diffusion to the user.

Alternatively, a plurality of thermoelectric elements may be implemented inside the device's chassis and along its right and left sides. They may be implemented in single file along a single plane.

Using a plurality of thermoelectric elements enables a temperature change (or temperature gradient) moving along the mobile device's sides, depending on which thermoelectric element is turned on first. They may be turned on in a linear sequence to convey the sense of temperature moving from one point to another.

The thermoelectric element may be attached to cooling fins.

The device may also comprise at least a vent which is carried out in its chassis.

The cooling fins and vents may help to dissipate heat from the inside of the chassis.

According to one aspect of the invention, a thermal conductive material is located on the chassis in order to improve the thermal exchanges between the inside and the outside of the device.

In further aspects of the invention, the plurality of thermoelectric elements is distributed along at least one side of the device, the control of each one of the thermoelectric element being based differently on the comparison.

According to the invention, there is also provided a method for controlling at least one thermoelectric element, the method comprising the steps of:
- determining a target destination;
- collecting from a sensor input data representative of the position and/or orientation of a mobile device ;
- comparing the input data with the target destination;
- determining at least a control command to drive the temperature of the at least one thermoelectric element based on the said comparison.

According to the invention, there is also provided a computer program product, stored on a computer readable medium, controlling at least one thermoelectric element, the computer program comprising code means to take the steps of the method described above.

A better understanding of the embodiments of the present invention can be obtained from the following detailed description in conjunction with the following drawings, in which:
- Figure 1 is a schematic representation of the different components allowing the user to sense heat or cold through his mobile device;
- Figures 2a and 2b present two examples of mobile device movement;
- Figure 3 is a flow diagram illustrating a method for a user to navigate towards a final destination;
- Figure 4 provides an example of a navigation path;
- Figure 5 illustrates the advantage of using a barometer as a sensor;
- Figures 6a and 6b present an example of placement of two thermoelectric elements on the back side of a mobile device;
- Figures 7a and 7b present an example of placement of a plurality of thermoelectric elements on the right and left sides of a mobile device.

The general idea is to improve the way navigation is performed with a mobile device by introducing one or several thermoelectric elements inside the mobile device. This allows cold or heat to be generated from electricity. A thermoelectric element is a device that creates a temperature difference when an electric voltage is applied to it. Typically, such thermoelectric device is a Peltier element, that is to say an element using the Peltier effect to convert an electric voltage to a difference of temperature between two parts of the thermoelectric element. Other thermoelectric effect may be used.

In one embodiment of the present invention, the thermoelectric element may not be strictly speaking a thermoelectric element but any element capable of creating the sensation of hot or cold, for example using electrical signals. This sensation can be transmitted by touching the element but also at some very short distance for example if using electrical signals or any other means.

Temperature change is associated with heat conduction. Heat conduction is the physical movement of heat energy from one place to another when there is a difference in the temperatures and it corresponds to the temperature gradient. It is measured in bodies of matter, which includes air. This temperature gradient is sensed by humans through their skin for example when they are in contact with another object. This information is translated into nervous signals that are sent to the brain and translated as sensing heat or cold.

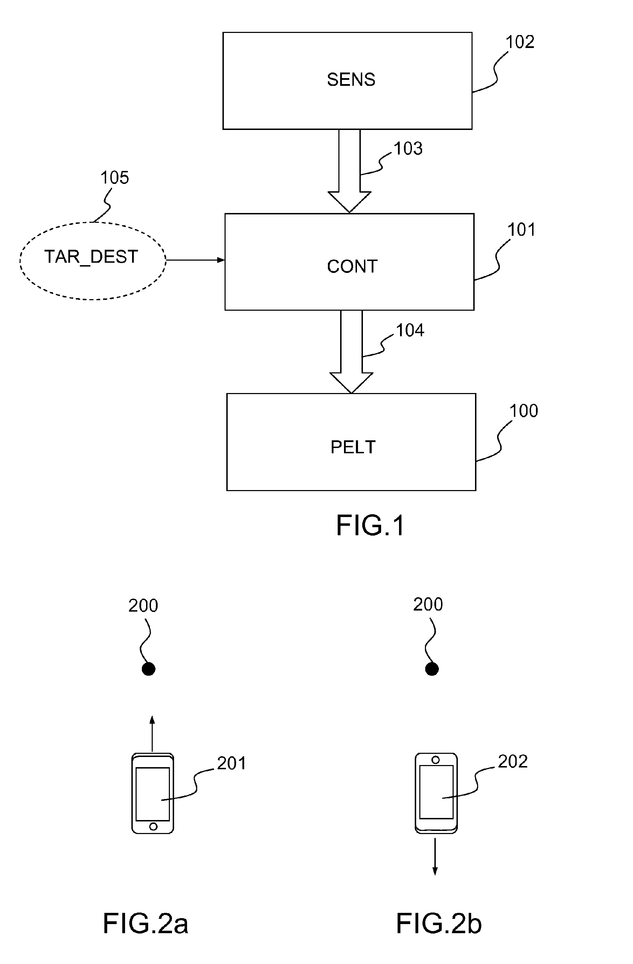

Figure 1 is a schematic representation of the different components allowing the user to sense heat or cold when touching his mobile device.

The mobile device comprises a thermoelectric element 100, means to control 101 the thermoelectric element 100, and at least one sensor 102 that provides data 103 representative of the mobile device position and/or orientation. The aim of the control means is to process the data 103 representative of the mobile device position in order to determine a control command 104 used as an input by the thermoelectric element 100. The control means are implemented for example by using central processing unit (CPU) embedded in the mobile device.

The sensor 102 can be a receiver compliant with a GNSS system that provides geographic coordinates. For example, a GPS receiver can be used.

The sensor can be gyroscope that measures the orientation of the mobile device.

Alternatively, the sensor can be a barometer that measures the atmospheric pressure, the said pressure being then converted into an estimation of the mobile device's altitude.

In another embodiment, a combination of two or more of these three types of sensors can be used by the control means 101 for determining a control command 104. The control command 104 will then be used to drive the temperature of the thermoelectric element 100. This control command 104 is an electric signal.

The thermoelectric element 100, the control means 101 and the sensor 102 can be adapted so that if the user maintains his mobile device in one hand, a sensation of cold or warmth will be perceived depending of his orientation and/or his movement towards a target destination 105.

In a preferred embodiment, the control means 101 will check if the user is approaching or on the contrary going further away from the target destination. If the user is approaching, the device 201 will go hotter (figure 2a), meanwhile if the user is going further away from the target destination 200, the device 202 will go colder (figure 2b). In another embodiment of the present invention, the device would go colder when approaching the target destination and hotter when going further away from the target destination.

In another embodiment, the thermoelectric element 100 is driven by the control means 101 using the orientation of the mobile device, that is to say the position of the mobile device with respect to its environment. For that purpose, the mobile device needs to be able to determine not only its location, but also its orientation. As already mentioned, the orientation of the mobile device can be determined by a gyroscope or a compass. The mobile device, according to its current location, determines a path to the target destination. Then, the mobile device will determine according to its current position the optimal orientation to follow this path. By employing data provided by both GNSS receiver and gyroscope, the method of navigation is both precise and flexible.

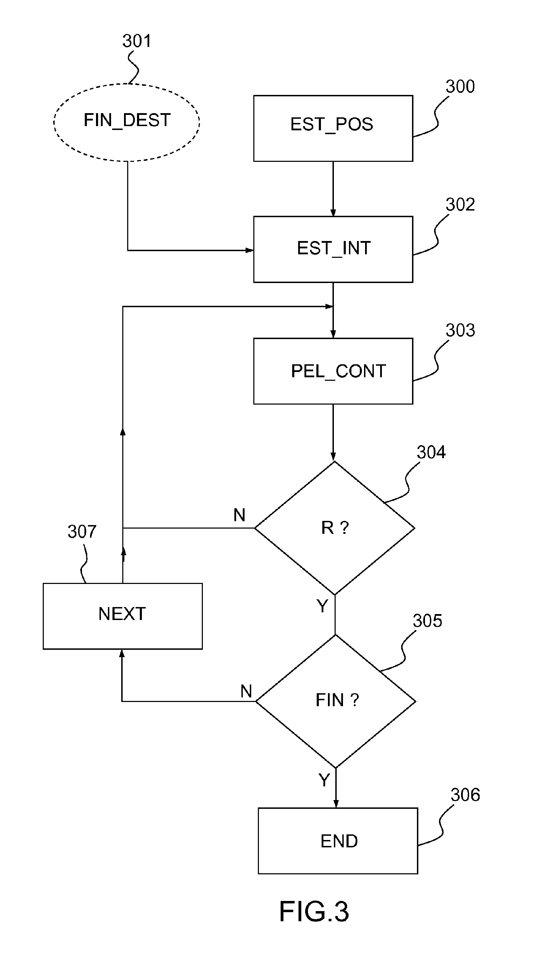

Figure 3 is a flow diagram illustrating a method for a user to navigate towards a final destination.

At the beginning, the current position of the mobile device is estimated 300. Then, the user provides data corresponding to his final destination 301. Based on the estimated position of the mobile device 300 and on the final destination 301, a navigation path is estimated 302. This navigation path comprises one point corresponding to the final destination and may additionally comprise one or several intermediate points. The intermediate points are estimated in order to reach the final destination in a cleverer way. For example, the intermediate points may be chosen in order to reach the final destination as fast as possible or to avoid crowded areas. Such calculation techniques are known from map applications such as Google Maps™ or Yahoo Maps™.

Then, the control means of the mobile device drives 303 the thermoelectric element as described previously with figure 1. The first target destination used for that purpose is the first intermediate point that belongs to the navigation path.

Afterward, it is checked periodically 304 if the current target destination is reached. If not, the way the thermoelectric element is controlled stays the same. If yes, it is checked 305 if the final destination is reached. If the final destination is reached, the method is terminated. If not, the next point that belongs to the navigation path is taken as the current target destination 307, and the way the thermoelectric element is controlled is adapted to take into account this new target destination.

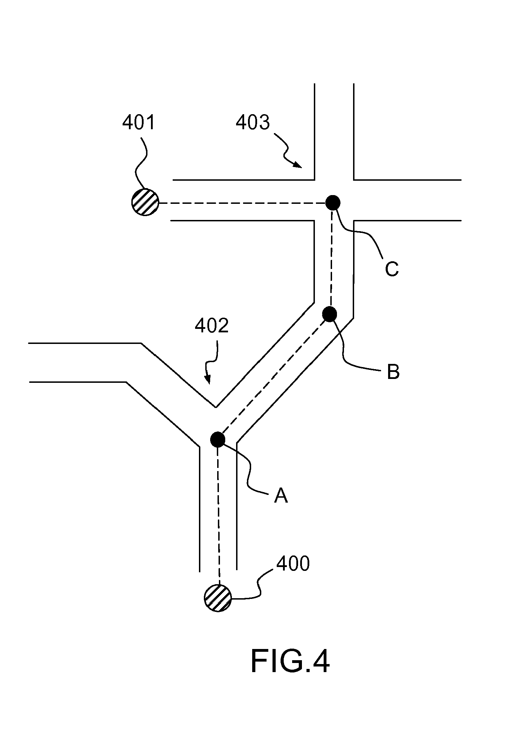

Figure 4 provides an example of a navigation path 404 comprising three intermediate points A, B, C. The current position 400 of the mobile device is estimated. Once the final destination 401 has been identified, the method according to the invention determines three intermediate points A, B and C. A, B and C are chosen as they are at intersections 402 or crossroads 403 where the user is presented with a choice.

It is also possible to travel from the start to the final destination without making use of the intermediate points. In this case, one embodiment could be to apply temperature change as a navigational aid in a gaming environment such as a hot and cold game where the task for the user is to travel from start to the final destination as quickly as possible. The goal of such game is for example to reach a specific location in a city without using a pre-determined path. Several teams may play to be the first to reach the said location. For that purpose, they can use their own mobile device to get closer to their goal, but they will have to decide which path they follow to reach the target destination first, based on the mobile device temperature feedback, i. e. variation of temperature.

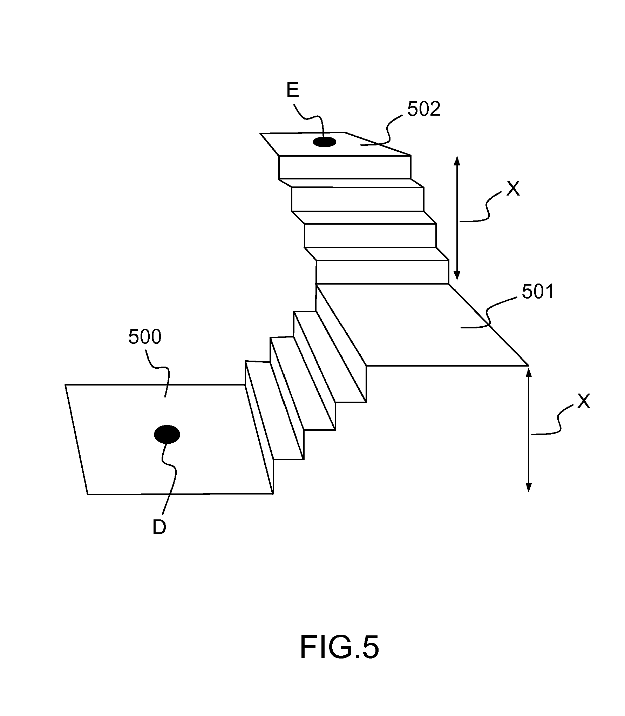

Figure 5 illustrates the advantage of using a barometer as a sensor. Incorporating a barometer in the mobile device allows taking into account changes in altitude. A barometer can be part of the mobile device's standard sensors, in the same way that the GNSS and/or gyroscopic sensors. MEMS or NEMS barometric sensors can be used. These sensors can measure the absolute pressure and variation of pressure. Weather also affects pressure and can lead to inaccurate altitude measurements, but modern MEMS barometers usually include temperature sensors to compensate for these errors. Current MEMS sensors are sufficiently small to fit inside mobile devices, but also sensitive enough to differentiate between one floor of a building and another.

In one aspect of the invention, the thermoelectric element is driven by the control means so that it changes temperature by Y °C every X meters in height, with X=5 meters for example. In the example of figure 5, the mobile device current position is represented by point D. The user's target destination is represented by point E. These two points D, E vary by horizontal position that can be determined using a GNSS sensor and vertical position that can be determined using a barometric sensor. Points D and E are situated respectively on a first level 500 and a second level 502 of a building. Additionally, an intermediate level 501 is located between the first 500 and the second 502 levels. If the height difference between the first floor 500 and the intermediate floor 501 is greater or equal to X and if the height difference between the intermediate floor 501 and the second floor 502 is greater or equal to X as well, the change in term of vertical position will be detected by the sensor and the control means of mobile device can be adapted so that it increases a first time the temperature of the thermoelectric element when the user reaches the intermediate level 501 and a second time when the user reaches the second level 502.

This embodiment has the advantage to help the user to find his way, for example when he has the choice between two stairs starting from the same place, one going upstairs and one going downstairs.

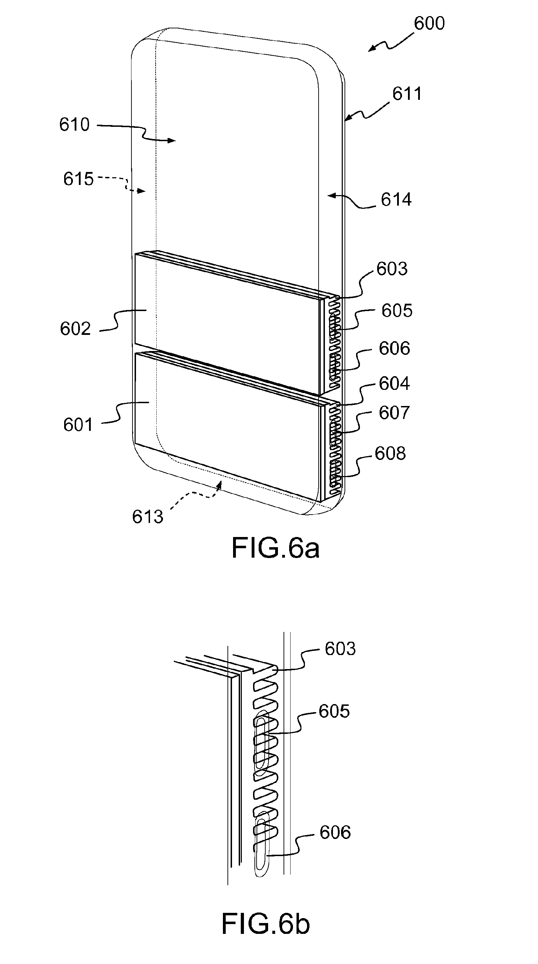

Figures 6a and 6b present an example of placement of two thermoelectric elements on the back side of a mobile device.

The mobile device comprises a chassis with a front side 610, a back side 611, a top side 612, a bottom side 613, a right side 614 and a left side 615.

The number and placement of the thermoelectric elements on the mobile device are important because they allow conveying the feeling of heat rising or cold dropping. In other words, it allows making temperature move in certain directions, depending on which thermoelectric element is turned on first.

In this example, two thermoelectric elements 601, 602 are located on the back side 610 of the mobile device 600. While it is possible to turn both on and off at the same time, it is also possible to turn them on and off separately. For that purpose, several independent control signals may be generated separately by the control means, one signal being used in order to control a given thermoelectric element.

So for instance, if the bottom thermoelectric element 601 is turned on cold, followed by the top thermoelectric element 602, again on cold, it is possible to convey the sensation of cold rising from the bottom to the top of the mobile device. This could be used in the navigational scenario by indicating that the user is getting colder (further away from the target destination) or hotter (closer to the target destination), when the start and target destination are at different altitudes.

The thermoelectric elements 601, 602 are attached to cooling fins 603, 604 which help dissipate heat. Heat is also dissipated using the air vents 605, 606, 607, 608 at the top and/or bottom of the mobile device. The function of the air vents is to avoid that the internal temperature of the mobile device increases too much.

The cooling fins 603, 604 and part of the chassis in contact with the thermoelectric elements can be made of a suitably good heat conductor, for example aluminium or copper.

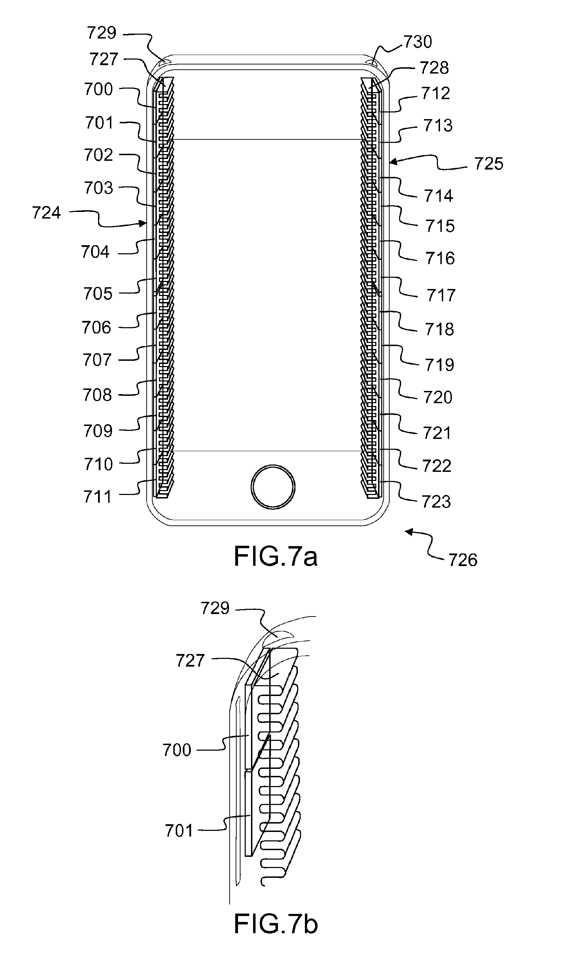

Figures 7a and 7b present an example of placement of a plurality of thermoelectric elements on the right and left sides of a mobile device.

This effect of cold or heat moving along in a particular plane is emphasized if smaller thermoelectric elements are arranged on the right and left sides of the chassis. Additionally, they may be arranged in single file and along a single plane. In this case, each thermoelectric element is smaller and thinner than the two thermoelectric elements 601, 602 presented in figure 6a. As a matter of fact, they form a strip of temperature output that can be controlled to convey heat/cold rising or dropping and this is felt by the user's fingers as they hold the sides of the mobile device.

In this example, twelve thermoelectric elements 700, 701, 702, 703, 704, 705, 706, 707, 708, 709, 710, 711 are implemented on the left side 724 of the mobile device 726 and twelve other thermoelectric elements 712, 713, 714, 715, 716, 717, 718, 719, 720, 721, 722, 723 are implemented on the right side 725 of the mobile.

As for figure 6a and 6b, the thermoelectric elements are attached to cooling fins 727, 728 which help dissipate heat. Heat is also dissipated using the air vents 729, 730 at the top of the mobile device.

As shown with figure 6a, 6b, 7a, 7b, the thermoelectric elements can be part of the mobile device's chassis. Alternatively, the thermoelectric elements can be integrated into the battery of the mobile device.

## Claims

1. A mobile device comprising at least one thermoelectric element (100), control means (101) and a sensor (102) providing input data (103) representative of the position and/or orientation of the mobile device, the control means (101) being arranged to:
- determine a target destination (105);
- collect input data from the sensor (102);
- compare the input data with the target destination;
- control (104) the temperature of the at least one thermoelectric element (100) based on this comparison.

2. The device according to claim 1, wherein the input data are generated by at least one of these sensors : a gyroscope, a GNSS receiver and/or a barometer that measures the atmospheric pressure, the said pressure being then converted into an estimation of the mobile device's altitude.

3. The device according to claim 1, wherein the temperature of the thermoelectric element is increased when it comes closer to the target destination and decreased when it moves away from it

4. The device according to one of the claim 1, wherein the temperature of the thermoelectric element is decreased when it comes closer to the target destination and increased when it moves away from it.

5. The device according to any of the previous claims, wherein the control means (101) determine a path toward the target destination, determines the optimal orientation to follow this path, the temperature of the thermoelectric element (100) being increased when the mobile device orientation comes closer to the said best orientation and decreases when it moves away from it.

6. The device according to claim 5, wherein a MEMS or NEMS barometric sensor is used to provide data representative of the device's position.

7. The device according to any of the previous claims, wherein the control means (101) are adapted to construct a navigation path (404) toward a final destination by determining at least an intermediate point (A, B, C).

8. The device according to any of the previous claims, wherein the thermoelectric element (601, 602) is located inside the device's chassis and against its back side (610).

9. The device according to any of the previous claims, wherein a plurality of thermoelectric elements (700, 701, 702, 703, 704, 705, 706, 707, 708, 709, 710, 711712, 713, 714, 715, 716, 717, 718, 719, 720, 721, 722, 723) are implemented inside the device's chassis and against its right and left sides.

10. The device according to any of the previous claims, wherein the thermoelectric element is attached to cooling fins (603, 604, 727, 728).

11. The device according to any of the previous claims, wherein at least a vent (605, 606, 607, 608, 729, 730) is carried out in the mobile device's chassis.

12. The device according to any of the previous claims, wherein a thermal conductive material is located on the chassis in order to improve the thermal exchanges between the inside and the outside of the device.

13. The device according to any of the previous claims, the plurality of thermoelectric elements being distributed along at least one side of the device, the control of each one of the thermoelectric element being based differently on the comparison.

14. A method for controlling at least one thermoelectric element (100), the method comprising the steps of:
- determining a target destination (105);
- collecting from a sensor (102) input data representative of the position and/or orientation of a mobile device;
- comparing the input data with the target destination;
- determining at least a control command (104) to drive the temperature of the at least one thermoelectric element (100) based on the said comparison.

15. A computer program product, stored on a computer readable medium, controlling at least one thermoelectric element (100), the computer program comprising code means to take the steps of claim 14.
